# EUROPÄISCHE PATENTSCHRIFT

(11) **EP 3 480 123 B1**
(45) Veröffentlichungstag und Bekanntmachung des Hinweises auf die Patenterteilung: **26.02.2020**
(21) Anmeldenummer: 18204698.7
(22) Anmeldetag: 06.11.2018
(51) Int. Cl.: B65B 25/06

(54) **BELADEVORRICHTUNG FÜR EINE SCHNEIDE- UND VERPACKUNGSANLAGE ZUM SCHNEIDEN UND VERPACKEN VON LEBENSMITTELN SOWIE SCHNEIDE- UND VERPACKUNGSANLAGE MIT DERARTIGER BELADEVORRICHTUNG**
LOADING DEVICE FOR A CUTTING AND PACKAGING MACHINE FOR CUTTING AND PACKAGING FOOD PRODUCTS, AND CUTTING AND PACKAGING MACHINE WITH SUCH A LOADING DEVICE
DISPOSITIF DE CHARGEMENT POUR UNE MACHINE DE DECOUPE ET D'EMBALLAGE POUR LA DECOUPE ET L'EMBALLAGE D'ALIMENTS, AINSI QU'UNE MACHINE DE DECOUPE ET D'EMBALLAGE AVEC LEDIT DISPOSITIF DE CHARGEMENT

(30) Priorität: 06.11.2017 DE 102017125878
(43) Veröffentlichungstag der Anmeldung: 08.05.2019
(73) Patentinhaber: Intrama Invest Eood, 9300 Dobritsch (BG)
(72) Erfinder:
(74) Vertreter: Wasiljeff, Johannes M.B.

(56) Entgegenhaltungen:
- US-A1- 2003 057 059
- US-A1- 2004 159 246
- US-A1- 2012 159 900
- US-A1- 2012 192 526

## Beschreibung

Die Erfindung betrifft eine Beladevorrichtung für eine Schneide- und Verpackungsanlage zum Schneiden und Verpacken von Lebensmitteln gemäß dem Oberbegriff von Anspruch 1 sowie eine Schneide- und Verpackungsanlage mit einer derartigen Beladevorrichtung gemäß dem Oberbegriff von Anspruch 14.

Bekannt sind Schneide- und Verpackungsanlagen zum Schneiden und Verpacken von Lebensmitteln, wie beispielsweise Wurst oder Käse, mit einer Schneidemaschine und einer Verpackungsmaschine. Die Schneidemaschine ist dabei derart ausgebildet, um die Lebensmittel in Scheiben zu schneiden und diese Scheiben sodann mittels eines Förderbandes längs eines Förderwegs in Richtung der Verpackungsmaschine zu fördern. Solche Anlagen sind z.B in US 2012/0159900 A1, US 2003/0057059 A1, US 2004/0159246 A1 und US 2012/0192626 A1 beschrieben. Üblicherweise befindet sich am Ende des Förderbandes ein Arbeitsplatz für eine Bedienperson, welche die Scheiben mittels eines Spachtels vom Förderband entnimmt und manuell in die Verpackungsmaschine legt, in der die Scheiben in vorbestimmten Verpackungsgrößen verpackt werden.

Die Tätigkeit der Bedienperson ist jedoch monoton und aufgrund stundenlanger Wiederholungen über einen Arbeitstag hinweg eine einseitige körperliche Belastung, die zu Unaufmerksamkeit und damit zu Fehlern der Bedienungsperson führen kann. Derartige Fehler können dann wiederum zu einer Beeinträchtigung des Herstellprozesses sowie des Verpackungsprozesses führen.

Teilweise werden Tätigkeiten der Bedienperson bereits durch Roboter oder eine Reihe mehrere Transportbänder ersetzt, die jedoch aufgrund ihrer substantiellen Größe einen erheblichen Platzbedarf mit sich bringen. Dieser zusätzliche Platzbedarf führt oft dazu, dass in eine bestehende Schneide- und Verpackungsanlage ein derartiger Roboter oder Reihen mehrerer Transportbänder nicht integriert werden können, da die Gesamtlänge der Anlage sich dadurch derart vergrößert, dass die Halle, in der eine derartige Anlage untergebracht ist, zu klein ist. Daher eignen sich derartige Roboter und Reihen mehrerer Transportbänder in einer Vielzahl von Fällen nicht.

Der Erfindung liegt daher die Aufgabe zu Grunde, Fehlerquellen durch unaufmerksame Bedienpersonen unter Weiterverwendung existierender Schneide- und Verpackungsanlagen zu reduzieren.

Die Erfindung löst diese Aufgabe mit einer Beladevorrichtung mit den Merkmalen gemäß Anspruch 1 sowie mit einer Schneide- und Verpackungsanlage mit den Merkmalen gemäß Anspruch 14.

Die erfindungsgemäße Beladevorrichtung ist demnach für eine Schneide- und Verpackungsanlage vorgesehen, die zum Schneiden von Lebensmitteln, wie beispielsweise Wurst oder anderen Fleischprodukten oder Käse dient, die vorzugsweise als Stangenprodukte in den Produktions- und Verpackungsprozess gelangen. Hierzu ist eine Schneidemaschine vorgesehen, welche die Lebensmittel in Scheiben schneidet. Zudem ist eine Verpackungsmaschine vorgesehen, welche die zu Gruppen angeordneten - und somit Scheibengruppen bildenden - Scheiben verpackt. Diese Beladevorrichtung weist eine in zwei quer zueinander stehenden horizontalen Achsen (X-Achse und Y-Achse) verfahrbare Transportbandeinrichtung auf. Mittels dieser Transportbandeinrichtung ist jeweils eine Scheibengruppe von einem Förderband der Schneidemaschine übernehmbar und an einen von mehreren in mehreren Spuren und mehreren Reihen angeordneten Verpackungsträgern übergebbar. Hierzu ist die Transportbandeinrichtung von einer Übernahmeposition in eine Übergabeposition längs beider horizontaler Achsen verfahrbar.

Erfindungsgemäß ist ferner eine Schneide- und Verpackungsanlage zum Schneiden und Verpacken von Lebensmitteln mit Schneidemaschine und Verpackungsmaschine vorgesehen, die eine derartige Beladevorrichtung aufweist.

Die Erfindung ermöglicht auf vorteilhafte Weise beliebige Positionen von Verpackungsträgern anfahren zu können, die in einer Matrix angeordnet sind, deren Format und Größe variabel ist. Zudem ermöglicht die Erfindung auf vorteilhafte Weise eine mehrfache, insbesondere doppelte oder dreifache, Bestückung von Verpackungsträgern, beispielsweise indem ein Verpackungsträger mit zwei oder drei parallel zueinander liegenden Scheibengruppen bestückt wird.

Durch diese Maßnahmen erlaubt die Erfindung eine Bedienperson von ihrer monotonen Tätigkeit der Beladung der Verpackungsmaschine zu entlasten, indem eine nur wenig Platz beanspruchende erfindungsgemäße Beladevorrichtung bereitgestellt wird.

Gemäß einer Weiterbildung der Erfindung weist die Beladevorrichtung eine Antriebseinrichtung mit einem ersten elektrischen, pneumatischen oder elektropneumatischen Antrieb zum Verfahren der Transportbandeinrichtung entlang einer ersten horizontalen Achse (X-Achse) und mit einem zweiten elektrischen, pneumatischen oder elektropneumatischen Antrieb zum Verfahren der Transportbandeinrichtung entlang einer zweiten horizontalen Achse (Y-Achse) auf, wobei beide Antriebe unabhängig voneinander steuerbar sind. Dabei verläuft die erste horizontale Achse (X-Achse) in horizontaler Förderrichtung, d.h. in Richtung der horizontalen Komponente der gegebenenfalls schräg aufwärts gerichteten Förderrichtung. Die zweite horizontale Achse (Y-Achse) ist dabei quer zu dieser horizontalen Förderrichtung, jedoch ebenfalls in der Horizontalebene ausgerichtet.

Somit können für die Lebensmittelindustrie geeignete, saubere Antriebe bereitgestellt werden, die insbesondere auf Hydrauliköle verzichten.

Außerdem können somit Bewegungen in der horizontalen Ebene ausgeführt werden, die in X-Richtung und in Y-Richtung unabhängig voneinander durchgeführt werden können. Auf diese Weise ist auch eine Position eines Verpackungsträgers anfahrbar, die lediglich eine Bewegung in einer Richtung erfordert, zum Beispiel lediglich in X-Richtung oder lediglich in Y-Richtung.

Eine Weiterbildung der Erfindung sieht vor, dass die Transportbandeinrichtung wenigstens ein umlaufendes Transportband umfasst, das mittels einer Antriebsrolle antreibbar ist, die von einem elektrischen, pneumatischen oder elektropneumatischen Antriebsrollenantrieb antreibbar ist. Auf diese Weise ist sichergestellt, dass auch das Transportband der Transportbandeinrichtung sauber und lebensmittelgerecht angetrieben werden kann.

Gemäß einer Weiterbildung der Erfindung ist eine Steuereinrichtung zum Steuern des ersten Antriebs, des zweiten Antriebs und des Antriebsrollenantriebs vorgesehen, wobei die Steuerung derart ausgelegt ist, dass eine Scheibengruppe bei stillstehendem Verpackungsträger vom Transportband auf den Verpackungsträger übergeben werden kann, indem die Transportbandeinrichtung entgegen der horizontalen Förderrichtung entlang der ersten horizontalen Achse (X-Achse) mit einer Geschwindigkeit verfahrbar ist, die der horizontalen Geschwindigkeitskomponente des Transportbands entspricht.

Vorteilhafterweise ergibt sich somit keine Relativgeschwindigkeit zwischen einer Scheibengruppe und einem Verpackungsträger, da sich die Transportbandeinrichtung genauso schnell rückwärts bewegt, wie sich das Transportband in horizontaler Richtung vorwärts bewegt. Dies ermöglicht ein präzises Ablegen einer Scheibengruppe an einer vorbestimmten Position auf einem Verpackungsträger.

Gemäß einer Weiterbildung der Erfindung umfasst die Steuereinrichtung eine Mehrzahl von Datensätzen, die für unterschiedliche Formate (zum Beispiel 2 x 3, 3 x 3, 3 x 4, usw.) und Größen der Matrix der Verpackungsträger, insbesondere nutzerseitig und/oder herstellerseitig, konfigurierbar sind, wobei die Steuereinrichtung den ersten Antrieb, den zweiten Antrieb und den Antriebsrollenantriebs entsprechend diesen Datensätzen ansteuert. Dadurch wird ein Umstieg zwischen unterschiedlichen Matrizen durch einfache Änderung von Datensätzen ermöglicht. Hierzu ist keine mechanische Umrüstung der Beladevorrichtung erforderlich. Vielmehr genügt eine Änderung von Softwareparametern.

Gemäß einer Weiterbildung der Erfindung umfasst die Transportbandeinrichtung zwei umlaufende Transportbänder, die parallel zueinander mit gleicher Geschwindigkeit angetrieben werden. Dabei ist zwischen den Transportbändern eine Lücke vorgesehen und im Bereich dieser Lücke ein Sensor angeordnet. Mittels dieses Sensors ist die Position einer Scheibengruppe erfassbar. Somit kann auf vorteilhafte Weise eine eintreffende Scheibengruppe präzise erfasst werden. Alternativ ist der Sensor in Förderrichtung betrachtet vor einem Transportband, bspw. zwischen dem Transportband unter einem Förderband einer Schneidemaschine, angeordnet. Eine derartige Anordnung ist insbesondere dann vorteilhaft, wenn lediglich ein einzelnes Transportband ohne die vorgenannte Lücke vorgesehen ist.

Gemäß einer Weiterbildung der Erfindung ist der Sensor ein Lasersensor, dessen ausgesendeter Laserstrahl durch die Lücke hindurch gesendet wird. Ein derartiger Lasersensor ist eine kostengünstige Möglichkeit, eine präzise Erfassung einer Scheibengruppe zu ermöglichen.

Eine Weiterbildung der Erfindung sieht eine Referenzpunktermittlungseinrichtung zum Ermitteln eines Referenzpunktes von auf dem Förderband der Schneidemaschine eintreffenden Scheibengruppen vor, beispielsweise einer äußeren Kante bzw. eines Anfangspunktes oder eines Punktes einer derartigen Kante. Der auf diese Weise ermittelte Referenzpunkt wird der Steuereinrichtung zugeführt, die den ersten Antrieb, den zweiten Antrieb und den Antriebsrollenantrieb in Abhängigkeit von diesem Referenzpunkt ansteuert.

Auf diese Weise ist eine Kalibrierung der Antriebe unter Berücksichtigung der Position der Beladevorrichtung relativ zur Schneidemaschine möglich. Dies erlaubt eine Korrektur der Übernahmeposition, d.h. der Position der Übernahme von Scheibengruppen vom Förderband der Schneidemaschine auf das Transportband der Transportbandeinrichtung und somit eine korrespondierende Korrektur der Ansteuerung der Antriebe.

Gemäß einer Weiterbildung der Erfindung weist die Referenzpunktermittlungseinrichtung ein manuell einstellbares Stellglied und einen Positionssensor, beispielsweise ein Potentiometer, zum Erfassen einer Position des Stellgliedes auf, mittels dem die Position des Referenzpunktes in ein elektrisches Signal umgewandelt wird. Dieses elektrische Signal wird sodann der Steuereinrichtung zugeführt. Dies ermöglicht eine einfache Erfassung des Referenzpunktes.

Eine Weiterbildung der Erfindung sieht vor, dass das Transportband bzw. im Falle mehrerer Transportbänder jedes der Transportbänder eine Vielzahl von in Reihe und in Förderrichtung angeordneter luftdurchlässiger Löcher aufweist, wobei unterhalb eines oberen Teilabschnitts des Transportbands bzw. des jeweiligen Transportbands eine Unterdruckeinrichtung zur Erzeugung eines Unterdrucks angeordnet ist, die derart mit den Löchern zusammenwirkt, dass Luft durch die Löcher in die Unterdruckeinrichtung eingesogen wird und/oder eine Scheibengruppe auf das Transportband bzw. die Transportbänder gesaugt wird. Somit wird gewährleistet, dass eine sich auf dem Transportband bzw. den Transportbändern befindende Scheibengruppe nicht verrutscht, insbesondere bei der Übergabe einer Scheibengruppe an die dem Transportband bzw. den Transportbändern in Förderrichtung folgende Verpackungsmaschine. Die Zusammenwirkung von Unterdruckeinrichtung und Löchern findet daher vorzugsweise im Endbereich des Transportbands bzw. der Transportbänder statt. Die Unterdruckeinrichtung kann aber auch derart ausgebildet sein, dass das Zusammenwirken mit den Löchern weitere Bereiche des Transportbands bzw. der Transportbänder erfasst. Bspw. kann auch der Bereich der Übernahme von Scheibengruppen von der Schneidemaschine ein derartiger Bereich sein, bei dem die Unterdruckeinrichtung mit den Löchern zusammenwirkt. Dieser Anfangsbereich des Transportbands bzw. der Transportbänder kann somit vorteilhafterweise ebenfalls gegen Verrutschen der Scheibengruppen gesichert werden. Insbesondere am Anfangsbereich und am Endbereich des Transportbands bzw. der Transportbänder besteht eine erhöhte Gefahr des Verrutschens der Scheibengruppen, wobei jedoch der Endbereich besonders gefährdet ist. Daher sind diese Bereiche besonders vorteilhaft durch die Unterdruckeinrichtung gegen ein Verrutschen der Scheibengruppen gesichert.

Sofern mehrere Transportbänder vorgesehen sind, ist an jedem Transportband wenigstens eine Reihe luftdurchlässiger Löcher vorgesehen, so dass an jedem Transportband durch die Unterdruckeinrichtung eine Sicherung der Scheibengruppen gegen Verrutschen stattfindet. Ist nur ein Transportband vorgesehen, genügt eine derartige Reihe luftdurchlässiger Löcher im Transportband. Es können aber auch an einem einzelnen Transportband mehrere parallel zueinander angeordnete Reihen luftdurchlässiger Löcher vorgesehen sein, um einen breiteren Bereich des Transportbands mit der Fähigkeit auszustatten, Scheibengruppen ansaugen zu können.

Die Unterdruckeinrichtung weist zur Erzeugung eines Unterdrucks vorteilhafterweise einen nach dem Bernoulli-Effekt arbeitenden pneumatischen Vakuumgenerator auf. Hierzu ist lediglich eine Druckluftquelle vorzusehen, die Druckluft an einen derartigen Vakuumgenerator liefert. Dank der bereitgestellten Druckluft kann eine Luftströmung im Vakuumgenerator bereitgestellt werden, welche mithilfe des Bernoulli-Effekts einen Unterdruck erzeugen kann.

Eine derartige Anordnung ist vorteilhaft, da Druckluft regelmäßig bei Schneide- und Verpackungsanlagen der Lebensmittelindustrie zum Antrieb bzw. verstellen beweglicher Komponenten bereitsteht. Der vorstehend genannte nach dem Bernoulli-Effekt arbeitende Vakuumgenerator ist zudem deshalb vorteilhaft, da er eine relativ kleine Bauform ermöglicht und daher an der Transportbandeinrichtung angeordnet werden kann.

Alternativ zu einem derartigen nach dem Bernoulli-Effekt arbeitenden Vakuumgenerator kann eine Vakuumpumpe verwendet werden. Eine solche Vakuumpumpe ist vorzugsweise außerhalb der Transporteinrichtung angeordnet. Der Grund besteht in der größeren Bauform einer derartigen Vakuumpumpe gegenüber einem nach dem Bernoulli-Effekt arbeitenden Vakuumgenerator.

Gemäß einer Weiterbildung der Erfindung weist die Unterdruckeinrichtung eine nach oben orientierte Scheibengruppen-Ansaugdüse mit länglichem Querschnitt auf, welche einem Teil der Löcher derart gegenüberliegt, dass eine sich im Bereich dieser Scheibengruppen-Ansaugdüse befindende Scheibengruppe infolge eines Unterdrucks in der Scheibengruppen-Ansaugdüse auf das Transportband bzw. die Transportbänder gesaugt wird. Dabei weist der Querschnitt der Scheibengruppen-Ansaugdüse in Draufsicht eine Breite quer zur Förderrichtung auf, die - vorzugsweise ein Vielfaches - kleiner ist als die Länge des Querschnitts in Förderrichtung. Hieraus folgt eine in Förderrichtung längs orientierte Scheibengruppen-Ansaugdüse. Dies ermöglicht eine effektive Ansaugleistung. Zugleich ergibt sich durch die längs orientierte Anordnung der Scheibengruppen-Ansaugdüse eine geringe Bremswirkung auf das Transportband bzw. der Transportbänder trotz seines Kontakts zwischen dem Transportband bzw. den Transportbändern und der Unterdruckeinrichtung. Folglich sind etwaige durch Reibung entstehende Verluste gering.

Eine Weiterbildung der Erfindung sieht vor, dass in Förderrichtung gesehen seitlich rechts und links neben der Scheibengruppen-Ansaugdüse jeweils eine Abdicht-Saugdüse vorgesehen ist, die derart mit dem Transportband bzw. den Transportbändern zusammenwirkt, dass das Transportband bzw. die Transportbänder an die Scheibengruppen-Ansaugdüse gesaugt wird. Auf diese Weise kann die Kontur der Scheibengruppen-Ansaugdüse mittels des Transportbands bzw. der Transportbänder abgedichtet werden, so dass Luft im Wesentlichen nur durch die Löcher im Transportband bzw. in den Transportbändern in die Scheibengruppen-Ansaugdüse gesogen wird. Dies steigert die Effizienz der Unterdruckeinrichtung.

Gemäß einer Weiterbildung der Erfindung sind die Scheibengruppen-Ansaugdüse und die Abdicht-Saugdüsen über einen oder mehrere Kanäle miteinander und mit einem Vakuumgenerator, insbesondere einem nach dem Bernoulli-Effekt arbeitenden Vakuumgenerator, oder einer Vakuumpumpe verbunden. Der Vakuumgenerator bzw. die Vakuumpumpe sind vorteilhafterweise außerhalb des Transportbands bzw. außerhalb der Transportbänder angeordnet. Dies ermöglicht eine Platz sparende Anordnung der Komponenten der Unterdruckeinrichtung. Wie bereits oben ausgeführt, ist der Vakuumgenerator jedoch bevorzugt in der Transportbandeinrichtung untergebracht. Die Vakuumpumpe ist bevorzugt außerhalb der Transportbandeinrichtung angeordnet.

Eine erfindungsgemäße Schneide- und Verpackungsanlage sieht zudem vor, dass die Beladevorrichtung in Förderrichtung betrachtet seitlich neben der Schneidemaschine und/oder seitlich neben der Verpackungsmaschine steht. Hierdurch ergibt sich eine besonders platzsparende Anordnung der Beladevorrichtung, die insbesondere verhindert, dass sich die Länge der gesamten Anlage vergrößert, zumindest aber nicht substanziell vergrößert.

Weiterbildungen der Erfindung ergeben sich aus den Ansprüchen, der Beschreibung und den Zeichnungen. Die vorgenannten Vorteile von Merkmalen und von Kombinationen mehrerer Merkmale sind beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausgestaltungen der Erfindung oder von Merkmalen unterschiedlicher Ansprüche ist ebenfalls abweichend von den gewählten Rückbeziehungen der Ansprüche möglich und wird hiermit vorgeschlagen. Dies betrifft auch solche Merkmale, die in separaten Zeichnungen dargestellt sind oder bei deren Beschreibung genannt werden. Diese Merkmale können auch mit Merkmalen verschiedener Ansprüche kombiniert werden. Ebenso können in Ansprüchen aufgeführte Merkmale für weitere Ausführungen der Erfindung entfallen.

In der Zeichnung zeigen:
- Fig. 1: eine schematische Seitenansicht einer Schneide- und Verpackungsanlage zum Schneiden und Verpacken von Lebensmitteln gemäß dem Stand der Technik,
- Fig. 2: eine schematische Seitenansicht einer Schneide- und Verpackungsanlage zum Schneiden und Verpacken von Lebensmitteln mit einer Beladevorrichtung gemäß einem Ausführungsbeispiel der Erfindung,
- Fig. 3: eine Detailansicht der in Fig. 2 gezeigten Beladevorrichtung im Bereich einer Transportbandeinrichtung der Beladevorrichtung,
- Fig. 4: eine Ansicht von oben eines Teils der in Fig. 2 gezeigten Schneideund Verpackungsanlage im Bereich der in Fig. 3 gezeigten Transportbandeinrichtung,
- Fig. 5: die Transportbandeinrichtung aus Fig. 4 in einer detaillierteren Ansicht von oben,
- Fig. 6: einen Ausschnitt der in Fig. 2 gezeigten Schneide- und Verpackungsanlage in einer Seitenansicht im Bereich der Beladevorrichtung nebst einer Referenzpunktermittlungseinrichtung,
- Fig. 7: die Referenzpunktermittlungseinrichtung gemäß Fig. 6 in einer Seitenansicht in Förderrichtung betrachtet und
- Fig. 8: eine Weiterbildung der bspw. in Fig. 5 gezeigten Transportbandeinrichtung mit einem mit Löchern versehenen Transportband und einer Unterdruckeinrichtung.

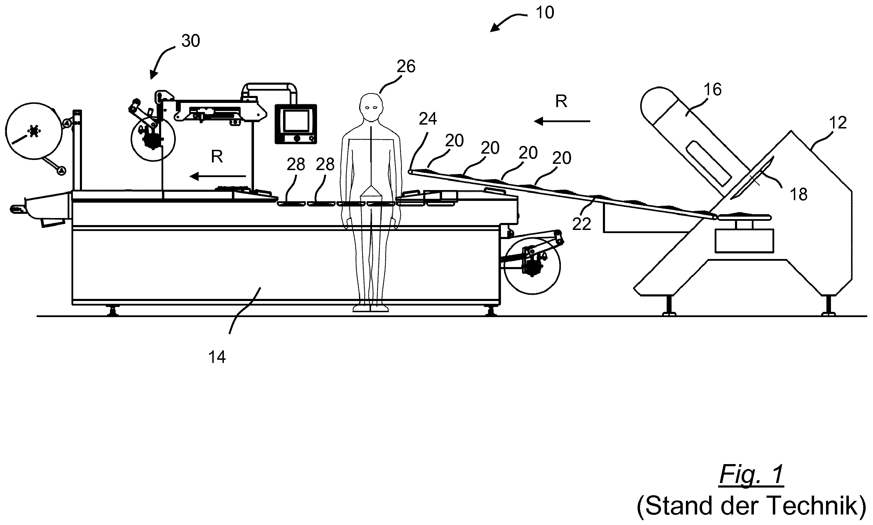

Fig. 1 zeigt eine herkömmliche Schneide- und Verpackungsanlage 10 mit einer Schneidemaschine 12 und einer Verpackungsmaschine 14. In der Schneidemaschine 12 werden stangenartig vorbereitete Lebensmittel, insbesondere Wurst oder Käse, mittels einer Zufuhreinrichtung 16 mittels eines Messers 18 zu Scheiben geschnitten, die zu Scheibengruppen 20 gruppiert über ein Förderband 22 in Richtung der Verpackungsmaschine 14 gefördert werden.

Im Bereich eines oberen Endes 24 des Förderbandes 22 entnimmt eine Bedienperson 26 die Scheibengruppen 20 und legt sie auf Verpackungsträger 28, die in Förderrichtung R entlang der Verpackungsmaschine 14 gefördert und in einer Siegelstation 30 versiegelt werden. Hierzu wird beispielsweise eine Folie auf oder um den Verpackungsträger geschweißt. Alternativ handelt es sich bei den Verpackungsträgern 28 um tiefgezogene Schalen, die in einer Tiefziehstation der Verpackungsmaschine 14 tiefgezogen werden.

Die Bedienperson 26 übt eine monotone Tätigkeit aus, indem sie jede einzelne Scheibengruppe 20 manuell von dem Förderband 22 der Schneidemaschine 12 entnimmt und auf die entsprechenden Verpackungsträger 28 legt. Eine - auch nur kurzzeitige Unterbrechung - dieser monotonen Tätigkeit würde dazu führen, dass einzelne Verpackungsträger unbestückt blieben und somit Ausschussware entsteht. Trotz der Monotonie der Tätigkeit der Bedienperson 26 muss die Bedienperson 26 konzentriert über viele Stunden immer wieder denselben Handgriff ausüben.

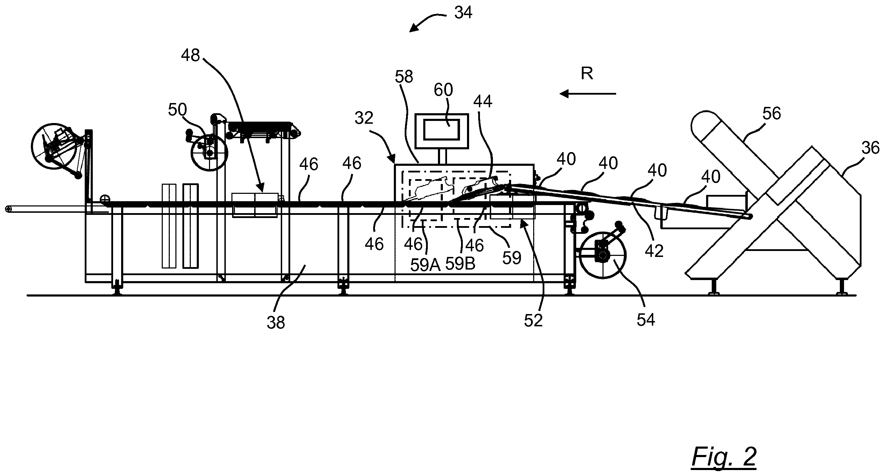

Um die Bedienperson 26 von dieser monotonen Tätigkeit zu entlasten, ist erfindungsgemäß eine automatische Beladevorrichtung 32 vorgesehen, wie sie in Fig. 2 gezeigt ist.

Fig. 2 zeigt eine erfindungsgemäße Schneide- und Verpackungsanlage 34, die die im Zusammenhang mit Fig. 1 beschriebenen Komponenten umfasst, jedoch zusätzlich die automatische Beladevorrichtung 32.

Im Einzelnen umfasst die Schneide- und Verpackungsanlage 34 daher ebenfalls eine Schneidemaschine 36 und eine Verpackungsmaschine 38, wobei die Beladevorrichtung 32 zum Beladen der Verpackungsmaschine 38 mit zu Gruppen 40 angeordneten - vorliegend "Scheibengruppen" genannte - Scheiben in horizontaler Förderrichtung R betrachtet seitlich neben der Schneidemaschine 36 bzw. deren Förderband 42 und seitlich neben der Verpackungsmaschine 38 steht.

Die Beladevorrichtung 32 umfasst eine Transportbandeinrichtung 44, welche Scheibengruppen 40 vom Förderband 42 der Schneidemaschine 36 aufnimmt und an die Verpackungsmaschine 38 übergibt, indem die Transportbandeinrichtung 44 Scheibengruppen 40 auf Verpackungsträger 46 auflädt, die entlang eines Förderwegs in horizontaler Förderrichtung R zu einer Siegelstation 48 gefördert werden.

In dieser Siegelstation 48 werden die Verpackungsträger 46 abschließend verpackt, indem eine Siegelfolie von einer Vorratsrolle 50 abgezogen und über die Verpackungsträger 46 gezogen wird. Die Siegelfolie wird dabei mit den jeweiligen Verpackungsträgern 46 verschweißt. Ggf. erfolgt zuvor eine Schutzbegasung eines unterhalb der Siegelfolie gebildeten Raumes.

Vorteilhafterweise, jedoch nicht notwendigerweise, umfasst die Verpackungsmaschine 38 eine Tiefziehstation 52, mit der von einer Vorratsrolle 54 abgezogene Kunststoffbahnen zu Schalen tiefgezogenen werden, welche die Verpackungsträger 46 bilden.

Quer zur Förderrichtung R werden Verpackungsträger in mehreren Spuren und mehreren Reihen bereitgestellt. Insbesondere erfolgt ein Tiefziehvorgang derart, dass eine Matrix von Verpackungsträgern mit einem Format entsprechend Spuranzahl x Reihenanzahl, beispielsweise mit einem Format von 3 x 2, d.h. für 3 Spuren in 2 Reihen, und somit für 6 Verpackungsträger 46, gebildet wird.

Eine derart gebildete Matrix und Verpackungsträgern 46 muss sodann von der Beladevorrichtung 32 beladen werden, indem jeweils eine oder mehrere Scheibengruppen auf einen Verpackungsträger 46 aufgelegt werden.

Die Beladevorrichtung 32 umfasst eine Steuereinrichtung 58, mittels der u.a. eine nur schematisch dargestellte Antriebseinrichtung 59 mit einem ebenfalls nur schematisch dargestellten ersten Antrieb 59A zum Verfahren der Transportbandeinrichtung 44 entlang einer ersten horizontalen Achse, der X-Achse, in horizontaler Förderrichtung R und mit einem ebenfalls nur schematisch dargestellten zweiten Antrieb 59B zum Verfahren der Transportbandeinrichtung 44 entlang einer zweiten horizontalen Achse, der Y-Achse, quer zur horizontalen Förderrichtung R angesteuert wird. Vorteilhafterweise ist zudem ein Bildschirm 60 zur Darstellung von Steuerungsparametern vorgesehen. Über eine Eingabevorrichtung können Steuerungsparametern verändert werden. Vorteilhafterweise ist die Eingabeeinrichtung dadurch gebildet, dass der Bildschirm 60 ein berührungssensitiver Bildschirm ist. Die Eingabevorrichtung kann aber auch in Form einer Tastatur ausgebildet sein.

Über diese Eingabevorrichtung, z.B. den berührungssensitiven Bildschirm 60, können Parameter des Prozesses eingegeben und verändert werden. Diese Parameter umfassen beispielsweise das oben beschriebene Format der Matrizen, die Größe der Matrizen, die Größe von Scheibengruppen, insbesondere im Hinblick auf die Länge sowie die Breite einer Scheibengruppe, die bestimmt wird durch das Kaliber der zu schneidenden Lebensmittel.

Wie bereits zuvor beschrieben, umfasst nämlich die Schneidemaschine 36 eine Zufuhreinrichtung 56 zum Zuführen von stangenartig bereitgestellten Lebensmitteln, wie Käse oder Fleischwaren, insbesondere Wurst oder Schinken, die mittels eines Messers zu Scheiben geschnitten werden. Bereits in der Schneidemaschine 36 werden die Scheiben zu den genannten Scheibengruppen 40 gruppiert. Das Kaliber der zugeführten stangenartigen Lebensmittel ist maßgeblich für die Breite einer Scheibengruppe.

Die vorgenannten Parameter können in Form von Datensätzen in der Steuereinrichtung hinterlegt sein bzw. werden, so dass ein Wechsel zwischen derartigen Datensätzen über eine einfache Eingabe über die Eingabevorrichtung möglich ist. Somit ist ohne aufwändige Umstellungen der Steuerung ein Wechsel zwischen unterschiedlichen Formaten und/oder ein Wechsel des stangenartigen Lebensmittelprodukts mit nur geringem Aufwand möglich.

Ferner können über die Eingabevorrichtung Geschwindigkeitsparameter für die einzelnen Prozessschritte eingegeben werden. Außerdem kann über die Eingabevorrichtung bestimmt werden, ob eine einzelne Scheibengruppe 40 oder mehrere Scheibengruppen 40 auf einen Verpackungsträger 46 aufgelegt werden.

Die Beladevorrichtung 32 ist in horizontaler Förderrichtung R gesehen seitlich neben der Schneidemaschine 36 bzw. deren Förderband 42 und/oder seitlich neben der Verpackungsmaschine 38 angeordnet. Daher ist die gesamte Schneide- und Verpackungsanlage 34 nicht oder nicht wesentlich länger als ohne eine derartige Beladevorrichtung 32. Die Beladevorrichtung 32 ist vorzugsweise als eigenständiges Gerät ausgebildet. Alternativ kann die Beladevorrichtung 32 aber auch in die Verpackungsmaschine 38 oder in die Schneidemaschine 36 integriert sein.

Die Betriebsweise der Schneide- und Verpackungsanlage 34 und der Beladevorrichtung 32 wird nachfolgend näher erläutert:

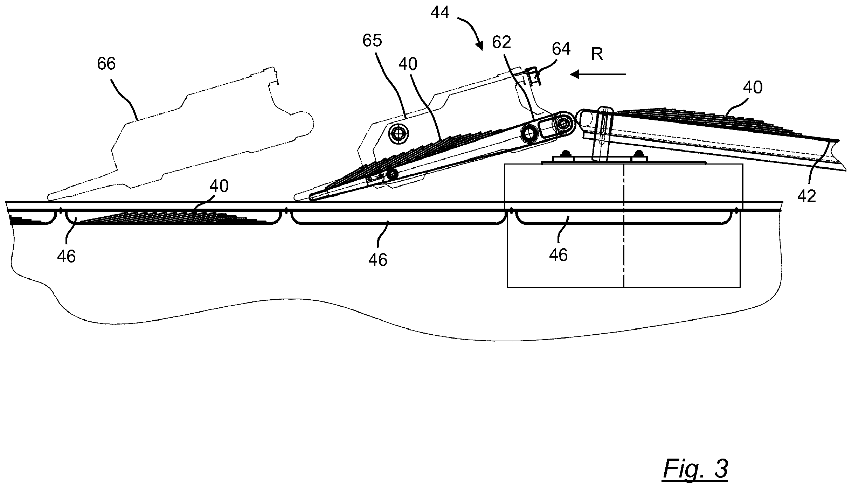

Fig. 3 zeigt in einer Seitenansicht einen Ausschnitt aus Fig. 2 im Bereich der Beladevorrichtung 32. Scheibengruppen 40 gelangen in Förderrichtung R über das Förderband 42 der Schneidemaschine 36 (in Fig. 2 gezeigt) zur Transportbandeinrichtung 44 der Beladevorrichtung 32. Die Transportbandeinrichtung 44 verfügt über ein Transportband 62, welches im Wesentlichen mit der gleichen Geschwindigkeit läuft wie das Förderband 42.

Nachdem eine Scheibengruppe 40 auf das Transportband 62 gelangt ist, was mittels eines Sensors 64 festgestellt werden kann, läuft das Transportband 62 eine vorbestimmte Strecke weiter, bis sich eine Scheibengruppe 40 mit ihrem vorderen Bereich am vorderen Ende des Transportbands 62 befindet. Sodann wird das Transportband 62 gestoppt.

Während sich eine Scheibengruppe 40 auf dem Transportband 62 befindet, wird die Transportbandeinrichtung 44 mittels eines entsprechenden Antriebs in horizontaler Förderrichtung R von einer Übernahmeposition 65 in eine Übergabeposition 66 verfahren. Gleichzeitig kann die Transportbandeinrichtung 44 auch quer zur horizontalen Förderrichtung R und zwar in einer horizontalen Ebene verfahren werden, so dass ein anderer Verpackungsträger 46 einer anderen Spur beladen werden kann.

Das Beladen eines Verpackungsträgers 46 erfolgt vorzugsweise während einer Stillstandsphase der Verpackungsträger 46. Dazu wird die Transportbandeinrichtung 44 entgegen der horizontalen Förderrichtung R verfahren und zugleich das Transportband 62 in üblicher Weise vorwärts angetrieben. Die Geschwindigkeiten des Transportbands 62 und der Transportbandeinrichtung 44 sind dabei derart aufeinander abgestimmt, dass eine Scheibengruppe 40 ohne horizontale Relativbewegung zum Verpackungsträger 46 auf diesen Verpackungsträger abgelegt wird. Die Transportbandeinrichtung 44 ist daher in der horizontalen Ebene sowohl in X-Richtung als auch in Y-Richtung mittels entsprechender Antriebe verfahrbar.

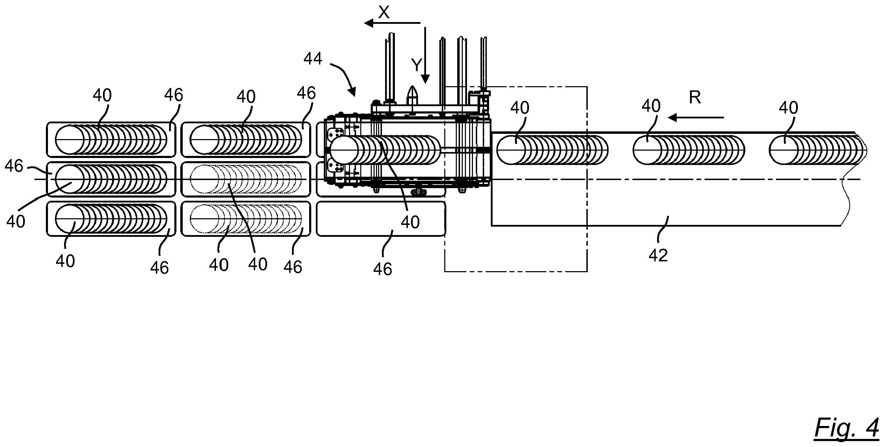

Fig. 4 zeigt eine Ansicht von oben des in Fig. 3 dargestellten Bereichs. Scheibengruppen 40 gelangen über das Förderband 42 der Schneidemaschine 36 (in Fig. 2 gezeigt) zur Transportbandeinrichtung 44 und werden sodann auf in mehreren, beispielsweise drei, Spuren angeordneten Verpackungsträger 46 geladen. Fig. 4 veranschaulicht die beiden Achsen, nämlich die X-Achse und die Y-Achse, in welche die Transportbandeinrichtung 44 verfahrbar ist.

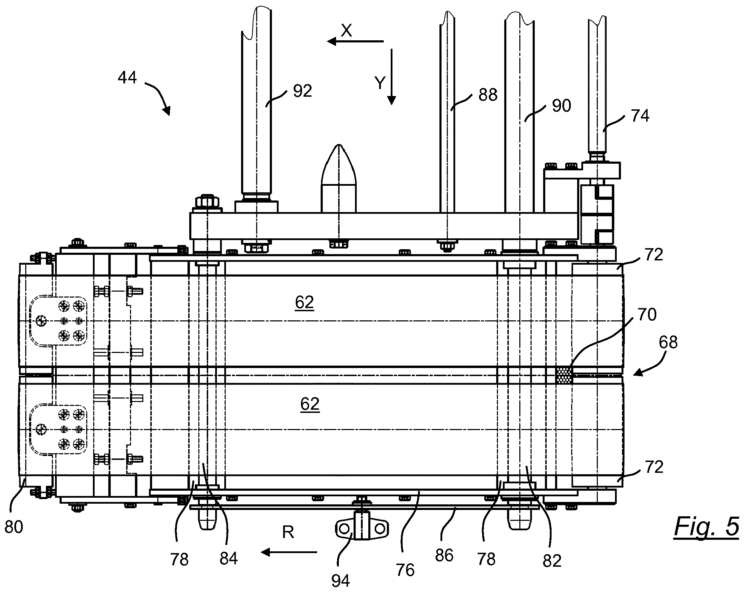

Fig. 5 zeigt die Transportbandeinrichtung 44 in einer vergrößerten Ansicht von oben. Die Transportbandeinrichtung 44 weist zwei parallel laufende Transportbänder 62 auf, die mit einer Lücke 68 zueinander beabstandet sind. Innerhalb dieser Lücke 68 ist ein mit dem Sensor 64 zusammenwirkendes Element 70, beispielsweise ein Reflektor, vorgesehen.

Die beiden Transportbänder 62 werden über eine bzw. jeweils einer Antriebsrolle 72 angetrieben, welche über eine Antriebswelle 74 angetrieben ist bzw. sind.

Die Antriebsrolle 72 bzw. Antriebsrollen 72, die Antriebswelle 74 sowie das mit dem Sensor 64 zusammenwirkende Element 70 sind unmittelbar oder mittelbar auf einem Schlitten 76 montiert. Auf diesem Schlitten 76 sind zudem weitere Führungsrollen 78 und - vorzugsweise aber nicht notwendigerweise nicht drehbare - Führungsmittel 80 zum Führen der Transportbänder 62 vorgesehen.

Die Führungsrollen 78 sind auf Achsen 82, 84 gelagert, die mittels eines Klammerblechs 86 miteinander in Verbindung stehen. Der Schlitten 76 der Transportbandeinrichtung 44 wird über eine Antriebsstange 88 in Richtung der Y-Achse verfahren, wobei zwei Führungsstangen 90, 92 vorgesehen sind, um den Schlitten 76 oberhalb der Verpackungsträger 46 zu halten.

Mittels einer Flügelschraube 94 oder einem anderen Befestigungselement kann der Schlitten 76 ohne Werkzeug demontiert werden, um ggf. einen Schlitten anderer Abmessung bereitzustellen.

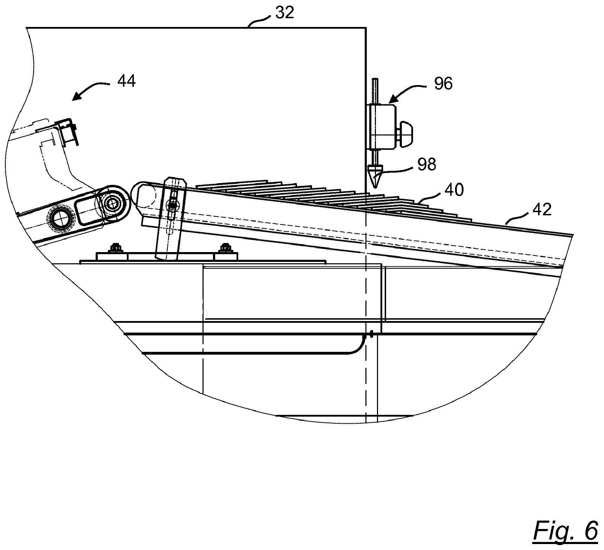

Fig. 6 zeigt eine Referenzpunktermittlungseinrichtung 96 in einer Seitenansicht, die oberhalb des endseitigen Abschnitts des Förderbands 42 der Schneidemaschine 36 (in Fig. 2 gezeigt) an der Beladevorrichtung 32 angeordnet ist. Diese Referenzpunktermittlungseinrichtung 96 weist ein in der Höhe und im Hinblick auf die Y-Richtung verschiebbares zeigerartiges Stellglied 98 auf, das derart eingestellt werden kann, dass es auf eine definierte Position eintreffender Scheibengruppen 40 gerichtet ist.

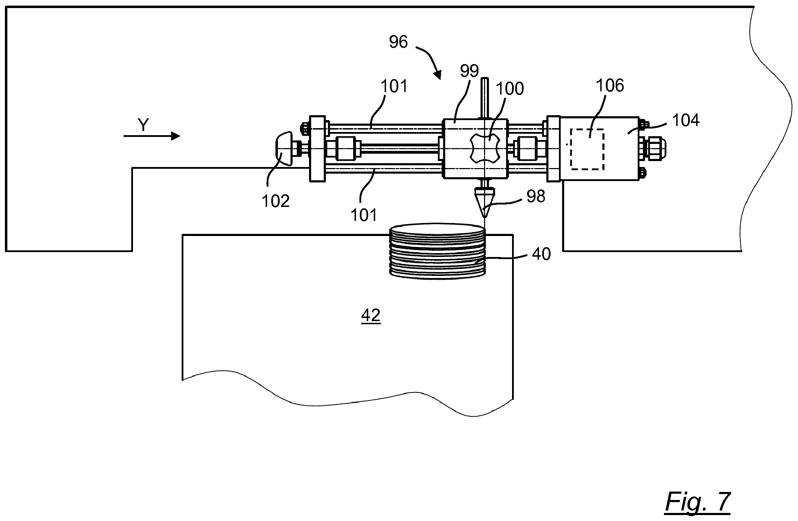

Fig. 7 zeigt diese Referenzpunktermittlungseinrichtung 96 ebenfalls in einer Seitenansicht, die jedoch um 90° versetzt gegenüber der in Fig. 6 gezeigten Seitenansicht ist. Das zeigerartige Stellglied 98 ist dabei derart eingestellt, dass es auf die äußere Kante der Scheibengruppe 40 zeigt. Das zeigerartige Stellglied 98 ist in einem Gehäuse 99 angeordnet und kann mittels eines Drehgriffs 100 vertikal verstellt werden. Eine horizontale Verstellung quer zur Förderrichtung und damit in Y-Richtung ist mittels des Drehgriffs 102 möglich. Dabei wird das Gehäuse 99 samt zeigerartigem Stellglied 98 entlang von Führungsachsen 101 verschoben.

Die Referenzpunktermittlungseinrichtung 96 weist einen in einem Gehäuse 104 angeordneten Positionssensor 106, beispielsweise in Form eines Potentiometers, auf, mittels dem die Position in Y-Richtung des zeigerartige Stellgliedes 98 erfasst werden kann. Der Positionssensor 106 erzeugt in Abhängigkeit der Position des Stellgliedes 98 ein elektrisches Signal, das der Steuereinrichtung 58 zugeführt wird. Die Steuereinrichtung 58 verwendet dieses Signal zur Anpassung bzw. Korrektur der Signale, mittels denen der Antrieb zum Verfahren der Transportbandeinrichtung 44 entlang der X-Achse und der Antrieb zum Verfahren der Transportbandeinrichtung 44 entlang der Y-Achse angesteuert werden.

Anstelle des zeigerartige Stellglied 98 oder auch zusätzlich zu dem zeigerartige Stellglied 98 kann eine elektronische Einrichtung nebst wenigstens einem Sensor bzw. einer Kamera zur optischen Erfassung der äußeren Kante der Scheibengruppen 40 vorgesehen sein, die dessen Funktion übernimmt.

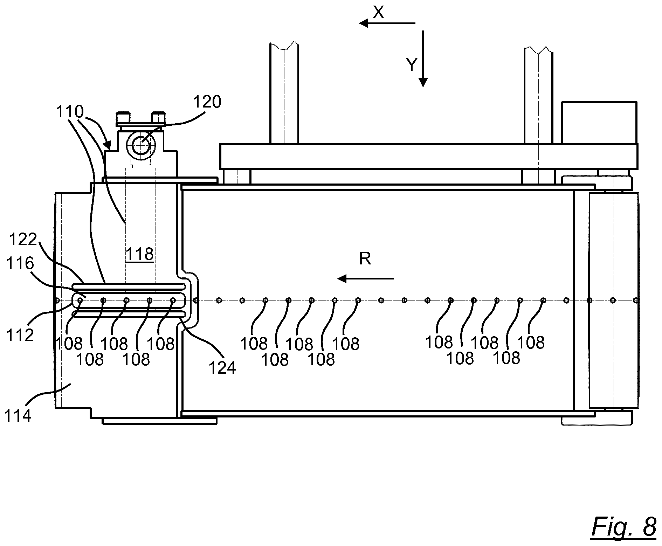

Fig. 8 zeigt eine Weiterbildung der bspw. in Fig. 5 gezeigten Transportbandeinrichtung 44' mit einem mit Löchern 108 versehenen Transportband 62' und einer Unterdruckeinrichtung 110. Das Transportband 62' ist lediglich mit einer dünnen Linie dargestellt, um seine Lage zu veranschaulichen, wobei die unterhalb des Transportbands 62' liegenden Komponenten, bspw. die Antriebsrolle 72 sowie wesentliche Komponenten der Unterdruckeinrichtung 110 aus darstellungstechnischen Gründen sichtbar gemacht worden sind. Tatsächlich verdeckt jedoch das Transportband 62' diese Komponenten weitgehend.

Die in Fig. 8 gezeigte Transportbandeinrichtung 44' weist zwar nur ein Transportband 62' auf. Die in Verbindung mit Fig. 8 erläuterte Unterdruckeinrichtung 110, welche mit den Löchern 108 zusammenwirkt, kann aber ebenso mit einer in Fig. 5 gezeigten Transportbandeinrichtung ausgeführt sein, so dass bei den dort parallel verlaufenden Transportbändern 62 jeweils eine Vielzahl von in Reihe und in Förderrichtung R angeordneter luftdurchlässiger Löcher vorgesehen ist, welche mit der Unterdruckeinrichtung derart zusammenwirken, dass Scheibengruppen 40 auf das jeweilige Transportband 62 gesaugt werden.

Die Löcher 108 wirken mit der Unterdruckeinrichtung 110 derart zusammen, dass Luft durch die Löcher 108 in die Unterdruckeinrichtung 110 eingesogen werden kann bzw. - sofern eine Scheibengruppe 40 auf dem Transportband über den Löchern 108 liegt - die Scheibengruppe 40 auf dem Transportband festgesaugt und somit gegen Verrutschen gesichert wird.

Die Unterdruckeinrichtung 110 weist eine Scheibengruppen-Ansaugdüse 112 auf, welche einem Teil der Löcher 108 gegenüberliegt. Diese Scheibengruppen-Ansaugdüse 112 sorgt dafür, dass eine sich im Bereich dieser Scheibengruppen-Ansaugdüse 112 befindende Scheibengruppe 40 infolge eines Unterdrucks in der Scheibengruppen-Ansaugdüse 112 auf das Transportband gesaugt wird. Dadurch wird die Scheibengruppe 40 fester mit dem Transportband verbunden, während sie über das Transportband befördert wird. Hierdurch wird ein Verrutschen der Scheibengruppe 40 vermieden. Dies ist insbesondere im Endbereich 114 des Transportbands 62' vorteilhaft, da beim Transport einer Scheibengruppe 40 über das Ende des Transportbands 62' hinweg die Wahrscheinlichkeit eines Verrutschens der Scheibengruppe 40 erhöht ist. Dies kann nachteilig sein, da dadurch der nachfolgende Verpackungsprozess gestört werden könnte. Eine Verhinderung eines Verrutschens der Scheibengruppen 40 ist deshalb vorteilhaft, da der Verpackungsprozess somit zuverlässiger betrieben werden kann.

Die Scheibengruppen-Ansaugdüse 112 weist einen länglichen Querschnitt (von oben betrachtet) auf und erstreckt sich mit einer nach oben gerichteten Öffnung 116 nach unten, wo sie mit einem Kanal 118 verbunden ist, der seitlich aus dem Bereich des Transportbands 62' heraus führt und in einem Anschluss 120 für einen nach dem Bernoulli-Effekt arbeitenden Vakuumgenerator oder eine Vakuumpumpe mündet.

In Förderrichtung R gesehen ist rechts und links neben der Scheibengruppen-Ansaugdüse 112 jeweils eine Abdicht-Saugdüse 122, 124 vorgesehen. Sie dienen im Wesentlichen zum Abdichten der Scheibengruppen-Ansaugdüse 112, indem das Förderband 62' von den Abdicht-Saugdüsen 122, 124 nach unten gezogen wird und somit die seitlichen Flanken der Öffnung 116 der Scheibengruppen-Ansaugdüse 112 durch das Förderband 62' abgedichtet werden.

Die Abdicht-Saugdüsen 122, 124 erstrecken sich analog der Scheibengruppen-Ansaugdüse 112 nach unten und sind ebenfalls mit dem Kanal 118 und somit mit dem nicht dargestellten Vakuumgenerator oder der nicht dargestellten Vakuumpumpe verbunden.

Bei einer vorteilhaften Ausgestaltung ist zwischen dem bspw. in Fig. 3 dargestellten Förderband 42 der Schneidemaschine 12 und dem Transportband 62, 62' eine Walze oder eine mit Rollen versehene Welle angeordnet, um eine eventuelle Lücke zwischen dem Förderband 42 der Schneidemaschine 12 und dem Transportband 62, 62' der Transportbandeinrichtung 44, 44' zu schließen. Eine derartige Lücke kann sich insbesondere dann ergeben, wenn das Förderband 42 über eine endseitig vorgesehene Welle mit großem Durchmesser geführt wird.

### Bezugszeichenliste:

- 10: Schneide- und Verpackungsanlage
- 12: Schneidemaschine
- 14: Verpackungsmaschine
- 16: Zufuhreinrichtung
- 18: Messer
- 20: Scheibengruppe
- 22: Förderband
- 24: Ende des Förderbands
- 26: Bedienperson
- 28: Verpackungsträger
- 30: Siegelstation
- 32: Beladevorrichtung
- 34: Schneide- und Verpackungsanlage
- 36: Schneidemaschine
- 38: Verpackungsmaschine
- 40: Scheibengruppe
- 42: Förderband der Schneidemaschine
- 44: Transportbandeinrichtung
- 46: Verpackungsträger
- 48: Siegelstation
- 50: Vorratsrolle für Siegelfolie
- 52: Tiefziehstation
- 54: Vorratsrolle
- 56: Zufuhreinrichtung
- 58: Steuereinrichtung
- 59: Antriebseinrichtung
- 59A: erster Antrieb
- 59B: zweiter Antrieb
- 60: Bildschirm
- 62: Transportband
- 64: Sensor
- 65: Übernahmeposition
- 66: Übergabeposition
- 68: Lücke
- 70: mit Sensor zusammenwirkende Element
- 72: Antriebsrolle
- 74: Antriebswelle
- 76: Schlitten
- 78: Führungsrollen
- 80: Führungsmittel
- 82: Achse
- 84: Achse
- 86: Klammerblech
- 88: Antriebsstange
- 90: Führungsstange
- 92: Führungsstange
- 94: Flügelschraube
- 96: Referenzpunktermittlungseinrichtung
- 98: zeigerartiges Stellglied
- 99: Gehäuse
- 100: Drehgriff
- 101: Führungsachse
- 102: Drehgriff
- 104: Gehäuse
- 106: Positionssensor
- 108: Löcher
- 110: Unterdruckeinrichtung
- 112: Scheibengruppen-Ansaugdüse
- 114: Endbereich
- 116: Öffnung
- 118: Kanal
- 120: Anschluss für Vakuumgenerator oder Vakuumpumpe
- 122: Abdicht-Saugdüse
- 124: Abdicht-Saugdüse
- R: Förderrichtung

## Patentansprüche

1. Beladevorrichtung für eine Schneide- und Verpackungsanlage (34) zum Schneiden von Lebensmitteln, wie beispielsweise Wurst oder Käse, mittels einer Schneidemaschine (36) zum Schneiden der Lebensmittel in Scheiben sowie zum Verpacken der zu Gruppen angeordneten - und somit Scheibengruppen (40) bildenden - Scheiben mittels einer Verpackungsmaschine (38),
**dadurch gekennzeichnet, dass**
die Beladevorrichtung (32) eine in zwei quer zueinander stehenden horizontalen Achsen (X, Y) verfahrbare Transportbandeinrichtung (44) umfasst, mittels der jeweils eine Scheibengruppe (40) von einem Förderband (42) der Schneidemaschine (36) übernehmbar ist und an einen von mehreren in mehreren Spuren und mehreren Reihen angeordneten Verpackungsträgern (46) übergebbar ist, indem die Transportbandeinrichtung (44) von einer Übernahmeposition (65) in eine Übergabeposition (66) längs beider horizontaler Achsen (X, Y) verfahrbar ist.

2. Beladevorrichtung nach Anspruch 1,
**gekennzeichnet durch**
eine Antriebseinrichtung (59) mit einem ersten elektrischen, pneumatischen oder elektropneumatischen Antrieb (59A) zum Verfahren der Transportbandeinrichtung (44) entlang einer ersten horizontalen Achse (X) in horizontaler Förderrichtung (R), mit der die Scheibengruppen (40) vom Förderband (42) der Schneidemaschine (36) eintreffen, und mit einem zweiten elektrischen, pneumatischen oder elektropneumatischen Antrieb (59B) zum Verfahren der Transportbandeinrichtung (44) entlang einer zweiten horizontalen Achse (Y) quer zur horizontalen Förderrichtung (R), wobei beide Antriebe (59A, 59B) unabhängig voneinander steuerbar sind.

3. Beladevorrichtung nach Anspruch 1 oder 2,
**dadurch gekennzeichnet, dass**
die Transportbandeinrichtung (44) wenigstens ein umlaufendes Transportband (62) umfasst, das mittels einer Antriebsrolle (72) antreibbar ist, die von einem elektrischen, pneumatischen oder elektropneumatischen Antriebsrollenantrieb (74) antreibbar ist.

4. Beladevorrichtung nach Anspruch 2 und 3,
**gekennzeichnet durch**
eine Steuereinrichtung (58) zum Steuern des ersten Antriebs (59A), des zweiten Antriebs (59B) und des Antriebsrollenantriebs (74) derart, dass eine Scheibengruppe (40) bei stillstehendem Verpackungsträger (46) vom Transportband (62) auf den Verpackungsträger (46) übergeben werden kann, indem die Transportbandeinrichtung (44) entgegen der horizontalen Förderrichtung (R) entlang der ersten horizontalen Achse (X) mit einer Geschwindigkeit verfahren wird, die der horizontalen Geschwindigkeitskomponente des Transportbands (62) entspricht.

5. Beladevorrichtung nach Anspruch 4,
**dadurch gekennzeichnet, dass**
die Steuereinrichtung (58) eine Mehrzahl von Datensätzen umfasst, die für unterschiedliche Formate und Größen der Matrix der Verpackungsträger (46) konfigurierbar sind, wobei die Steuereinrichtung (58) den ersten Antrieb (59A), den zweiten Antrieb (59B) und den Antriebsrollenantrieb (74) entsprechend diesen Datensätzen ansteuert.

6. Beladevorrichtung nach einem der vorhergehenden Ansprüche,
**dadurch gekennzeichnet, dass**
die Transportbandeinrichtung (44) zwei umlaufende Transportbänder (62) umfasst, die parallel mit gleicher Geschwindigkeit angetrieben werden, wobei zwischen den Transportbändern (62) eine Lücke (68) vorgesehen und im Bereich dieser Lücke (68) ein Sensor (64) angeordnet ist, mittels dem die Position einer Scheibengruppe (40) erfassbar ist.

7. Beladevorrichtung nach Anspruch 6,
**dadurch gekennzeichnet, dass**
der Sensor (64) ein Lasersensor ist, dessen ausgesendeter Laserstrahl durch die Lücke (68) hindurch gesendet wird.

8. Beladevorrichtung nach einem der vorhergehenden Ansprüche,
**gekennzeichnet durch**
eine Referenzpunktermittlungseinrichtung (96) zum Ermitteln eines Referenzpunktes von auf dem Förderband (42) der Schneidemaschine (36) eintreffenden Scheibengruppen (40), z.B. einer äußeren Kante der Scheibengruppe (40), wobei der ermittelte Referenzpunkt der Steuereinrichtung (58) zugeführt wird, die den ersten Antrieb (59A), den zweiten Antrieb (59B) und den Antriebsrollenantrieb (74) in Abhängigkeit von diesem Referenzpunkt ansteuert.

9. Beladevorrichtung nach Anspruch 8,
**dadurch gekennzeichnet, dass**
die Referenzpunktermittlungseinrichtung (96) ein manuell einstellbares Stellglied (98) und einen Positionssensor (106), beispielsweise ein Potentiometer, zum Erfassen einer Position des Stellgliedes (98) aufweist, der die Position des Referenzpunktes in ein elektrisches Signal umwandelt, das der Steuereinrichtung (58) zugeführt wird.

10. Beladevorrichtung nach einem der Ansprüche 3-9,
**dadurch gekennzeichnet, dass**
das Transportband (62') bzw. im Falle mehrerer Transportbänder jedes der Transportbänder eine Vielzahl von in Reihe und in Förderrichtung (R) angeordneter luftdurchlässiger Löcher (108) aufweist,
wobei unterhalb eines oberen Teilabschnitts des Transportbands (62') bzw. des jeweiligen Transportbands eine Unterdruckeinrichtung (110) zur Erzeugung eines Unterdrucks angeordnet ist, die derart mit den Löchern (108) zusammenwirkt, dass Luft durch die Löcher (108) in die Unterdruckeinrichtung (110) eingesogen wird und/oder eine Scheibengruppe (40) auf das Transportband (62') bzw. die Transportbänder gesaugt wird.

11. Beladevorrichtung nach Anspruch 10,**dadurch gekennzeichnet, dass** die Unterdruckeinrichtung (110) eine nach oben orientierte Scheibengruppen-Ansaugdüse (112) mit länglichem Querschnitt zum Ansaugen von Scheibengruppen (40) aufweist, welche einem Teil der Löcher (108) derart gegenüberliegt, dass eine sich im Bereich dieser Scheibengruppen-Ansaugdüse (112) befindende Scheibengruppe (40) infolge eines Unterdrucks in der Scheibengruppen-Ansaugdüse (112) auf das Transportband (62') bzw. die Transportbänder gesaugt wird,
wobei der Querschnitt der Scheibengruppen-Ansaugdüse (112) in Draufsicht eine Breite quer zur Förderrichtung (R) aufweist, die, insbesondere ein Vielfaches, kleiner ist als die Länge des Querschnitts in Förderrichtung (R).

12. Beladevorrichtung nach Anspruch 11,
**dadurch gekennzeichnet, dass**
in Förderrichtung (R) gesehen seitlich rechts und links neben der Scheibengruppen-Ansaugdüse (112) jeweils eine Abdicht-Saugdüse (122, 124) zum Abdichten vorgesehen ist, die derart mit dem Transportband (62') bzw. den Transportbändern zusammenwirken, dass das Transportband (62') bzw. die Transportbänder an die Scheibengruppen-Ansaugdüse (112) gesaugt wird.

13. Beladevorrichtung nach Anspruch 12,
**dadurch gekennzeichnet, dass**
die Scheibengruppen-Ansaugdüse (112) und die Abdicht-Saugdüsen (122, 124) über einen oder mehrere Kanäle (118) miteinander und mit einem Vakuumgenerator, insbesondere einem nach dem Bernoulli-Effekt arbeitenden Vakuumgenerator, oder einer Vakuumpumpe verbunden sind.

14. Schneide- und Verpackungsanlage zum Schneiden und Verpacken von Lebensmitteln, wie beispielsweise Wurst oder Käse, mit einer Schneidemaschine (36) und einer Verpackungsmaschine (38), wobei die Schneidemaschine (36) zum Schneiden der Lebensmittel in Scheiben ausgebildet ist und die Scheiben mittels eines Förderbandes (42) der Schneidemaschine (36) längs eines Förderwegs in Richtung der Verpackungsmaschine (38) förderbar sind, welche die Scheiben verpackt,
**dadurch gekennzeichnet, dass**
die Schneide- und Verpackungsanlage (34) eine Beladevorrichtung (32) nach einem der Ansprüche 1 bis 13 aufweist.

15. Anlage nach Anspruch 14,
**dadurch gekennzeichnet, dass**
die Beladevorrichtung (32) in Förderrichtung (R) betrachtet seitlich neben der Schneidemaschine (36) und/oder seitlich neben der Verpackungsmaschine (38) steht.

## Claims

1. A loading device for a cutting and packaging system (34) for cutting food, such as sausage or cheese, by means of a cutting machine (36) for cutting the food into slices and for packaging the slices arranged in groups and thus forming groups of slices (40) by means of a packaging machine (38),
**characterized in that**
the loading device (32) comprises a transport belt arrangement (44) movable in two horizontal axes (X, Y) standing transversely to each other, by means of which a respective group of slices (40) can be taken over from a conveyor belt (42) of the cutting machine (36) and can be delivered to one of a plurality of packaging carriers (46) arranged in a plurality of tracks and a plurality of rows, **in that** the transport belt arrangement (44) is movable along both horizontal axes (X, Y) from a take-over position (65) into a delivery position (66).

2. A loading device according to claim 1,
**characterized by**
a drive arrangement (59) with a first electric, pneumatic or electropneumatic drive (59A) for moving the transport belt arrangement (44) along a first horizontal axis (X) in the horizontal conveying direction (R), with which the groups of slices (40) arrive from the conveyor belt (42) of the cutting machine (36), and with a second electric, pneumatic or electropneumatic drive (59B) for moving the transport belt arrangement (44) along a second horizontal axis (Y) transverse to the horizontal conveying direction (R), the two drives (59A, 59B) being controllable independently of one another.

3. A loading device according to claim 1 or 2,
**characterized in that**
the conveyor belt arrangement (44) comprises at least one circulating transport belt (62) which can be driven by means of a drive roller (72) which can be driven by an electric, pneumatic or electro-pneumatic drive roller drive (74).

4. A loading device according to claim 2 or 3,
**characterized by**
a control arrangement (58) for controlling the first drive (59A), the second drive (59B) and the drive roller drive (74), such that a group of slices (40) can be delivered from the transport belt (62) to the packaging carrier (46) when the packaging carrier (46) is stationary, in such a way that the transport belt arrangement (44) is moved opposite to the horizontal conveying direction (R) along the first horizontal axis (X) at a speed corresponding to the horizontal speed component of the transport belt (62).

5. A loading device according to claim 4,
**characterized in that**
the control arrangement (58) comprises a plurality of data sets which are configurable for different formats and sizes of the matrix of the packaging carriers (46), the control arrangement (58) driving the first drive (59A), the second drive (59B) and the drive roller drive (74) in accordance with said data sets.

6. A loading device according to one of the preceding claims,
**characterized in that**
the transport belt arrangement (44) comprises two circulating transport belts (62) which are driven in parallel at the same speed, wherein a gap (68) is provided between the transport belts (62), and a sensor (64) is arranged in the region of this gap (68), by means of which the position of a group of slices (40) can be detected.

7. A loading device according to claim 6,
**characterized in that**
the sensor (64) is a laser sensor emitting a laser beam that is transmitted through the gap (68).

8. A loading device according to one of the preceding claims,
**characterized by**
a reference point determination arrangement (96) for determining a reference point of groups of slices (40) arriving on the conveyor belt (42) of the cutting machine (36), e.g. an outer edge of the group of slices (40), the determined reference point being fed to the control arrangement (58) which controls the first drive (59A), the second drive (59B) and the drive roller drive (74) depending on this reference point.

9. A loading device according to claim 8,
**characterized in that**
the reference point determining arrangement (96) comprises a manually adjustable actuator (98) and a position sensor (106), for example a potentiometer, for detecting a position of the actuator (98), which converts the position of the reference point into an electrical signal which is supplied to the control arrangement (58).

10. A loading device according to one of claims 3-9,
**characterized in that**
the transport belt (62') or, in the case of a plurality of transport belts, each of the transport belts has a plurality of air-permeable holes (108) arranged in row and in a conveying direction (R),
wherein below an upper portion of the transport belt (62') or of the respective conveyor belt there is arranged a vacuum arrangement (110) for generating a vacuum which cooperates with the holes (108) in such a way that air is sucked through the holes (108) into the vacuum arrangement (110) and/or a group of slices (40) is sucked onto the transport belt (62') or the transport belts.

11. A loading device according to claim 10, **characterized in that** the vacuum arrangement (110) has an upwardly oriented slice group suction nozzle (112) with an elongated cross-section for suctioning groups of slices (40), which suction nozzle (112) lies opposite a part of the holes (108) in such a way that a group of slices (40) located in the region of this slice group suction nozzle (112) is sucked onto the transport belt (62') or the transport belts as a result of a vacuum in the slice group suction nozzle (112), wherein the cross-section of the slice group suction nozzle (112) in plan view has a width transverse to the conveying direction (R) which is, in particular a multiple, smaller than the length of the cross-section in conveying direction (R).

12. A loading device according to claim 11,
**characterized in that**
a respective sealing suction nozzle (122, 124) for sealing is provided laterally to the right and left of the slice group suction nozzle (112), as seen in the conveying direction (R), which sealing suction nozzles cooperate with the transport belt (62') or the transport belts in such a way that the transport belt (62') or the transport belts is sucked onto the slice group suction nozzle (112).

13. A loading device according to claim 12,
**characterized in that**
the slice group suction nozzle (112) and the sealing suction nozzles (122, 124) are connected to one another via one or more channels (118) and to a vacuum generator, in particular a vacuum generator operating according to the Bernoulli effect, or a vacuum pump.

14. A cutting and packaging system for cutting and packaging food, such as sausage or cheese, with a cutting machine (36) and a packaging machine (38), the cutting machine (36) being designed to cut the food into slices and the slices being conveyable by means of a conveyor belt (42) of the cutting machine (36) along a conveying path in the direction of the packaging machine (38), which packs the slices,
**characterized in that**
the cutting and packaging system (34) comprises a loading device (32) according to one of claims 1 to 13.

15. A system according to claim 14,
**characterized in that**
the loading device (32), viewed in the conveying direction (R), stands laterally beside the cutting machine (36) and/or laterally beside the packaging machine (38).

## Revendications

1. Dispositif de chargement pour une installation de découpe et d'emballage (34) destinée à la découpe des denrées alimentaires, comme par exemple du saucisson ou du fromage, au moyen d'une machine à découper (36) pour découper les denrées alimentaires en tranches ainsi que pour emballer les tranches disposées en groupes et formant de ce fait des groupes de tranches (40), au moyen d'une machine à emballer (38),
**caractérisé en ce que**
le dispositif de chargement (32) comprend un système à bande transporteuse (44) pouvant se déplacer dans deux axes (X, Y) horizontaux se trouvant transversalement l'un par rapport à l'autre, au moyen duquel un groupe de tranches (40) peut être respectivement pris en charge par une bande transporteuse (42) de la machine à découper (36) et peut être délivré à un des plusieurs supports d'emballage (46) disposés en plusieurs files et plusieurs rangées, dans lequel le système à bande transporteuse (44) peut être déplacé d'une position de prise en charge (65) à une position de transfert (66) le long des deux axes (X, Y) horizontaux.

2. Dispositif de chargement selon la revendication 1,
**caractérisé par**
un système d'entraînement (59) avec un premier entraînement (59A) électrique, pneumatique ou électropneumatique pour déplacer le système à bande transporteuse (44) le long d'un premier axe (X) horizontal dans la direction de transport (R) horizontale, avec lequel les groupes de tranches (40) arrivent de la bande transporteuse (42) de la machine à découper (36) et avec un deuxième entraînement (59B) électrique, pneumatique ou électropneumatique pour déplacer le système à bande transporteuse (44) le long d'un deuxième axe (Y) horizontal transversalement à la direction de transport (R) horizontale, sachant que les deux entraînements (59A, 59B) peuvent être commandés indépendamment l'un de l'autre.

3. Dispositif de chargement selon la revendication 1 ou 2,
**caractérisé en ce que**
le système à bande transporteuse (44) comprend au moins une bande transporteuse (62) en rotation, qui peut être entraînée au moyen d'un rouleau d'entraînement (72), qui peut être entraîné par un système d'entraînement de rouleau d'entraînement (74) électrique, pneumatique ou électropneumatique.

4. Dispositif de chargement selon la revendication 2 et 3,
**caractérisé par**
un système de commande (58) pour commander le premier système d'entraînement (59A), le deuxième système d'entraînement (59B) et le système d'entraînement de rouleau d'entraînement (74) de telle manière qu'un groupe de tranches (40) peut être transféré de la bande transporteuse (62) sur le support d'emballage (46) avec le support d'emballage (46) à l'arrêt, le système à bande transporteuse (44) étant déplacé à l'opposé de la direction de transport horizontale (R) le long du premier axe horizontal (X) à une vitesse qui correspond à la composante de vitesse horizontale de la bande transporteuse (62).

5. Dispositif de chargement selon la revendication 4,
**caractérisé en ce que**
le dispositif de commande (58) comprend une pluralité de jeux de données, qui peuvent être configurés pour les différents formats et tailles de la matrice des supports d'emballage (46), sachant que le dispositif de commande (58) pilote le premier entraînement (59A), le deuxième entraînement (59B) et le système d'entraînement de rouleau d'entraînement (74) en fonction de ces jeux de données.

6. Dispositif de chargement selon l'une quelconque des revendications précédentes,
**caractérisé en ce que**
le système à bande transporteuse (44) comprend deux bandes transporteuses (62) en rotation qui sont entraînées parallèlement à une même vitesse, sachant qu'entre les bandes transporteuses (62) un interstice (68) est prévu et un capteur (64) est disposé dans la zone de cet interstice (68) au moyen duquel il est possible de saisir la position d'un groupe de tranches (40).

7. Dispositif de chargement selon la revendication 6,
**caractérisé en ce que**
le capteur (64) est un capteur au laser dont le faisceau laser émis est envoyé à travers l'interstice (68).

8. Dispositif de chargement selon l'une quelconque des revendications précédentes,
**caractérisé par**
un dispositif de détermination du point de référence (96) pour déterminer un point de référence des groupes de tranches (40) arrivant sur la bande transporteuse (42) de la machine à découper (36), par ex. : d'un bord extérieur du groupe de tranches (40), sachant que le point de référence déterminé est fourni au système de commande (58) qui pilote le premier entraînement (59A), le deuxième entraînement (59B) et le système d'entraînement de rouleau d'entraînement (74) en fonction de ce point de référence.

9. Dispositif de chargement selon la revendication 8,
**caractérisé en ce que**
le dispositif de détermination du point de référence (96) comporte un actionneur (98) réglable à la main et un capteur de position (106), par exemple un potentiomètre, pour saisir une position de l'actionneur (98), qui transforme la position du point de référence en un signal électrique, qui est fourni au dispositif de commande (58).

10. Dispositif de chargement selon l'une quelconque des revendications 3-9,
**caractérisé en ce que**
la bande transporteuse (62') ou en cas de plusieurs bandes transporteuses, chacune des bandes transporteuses, comporte une pluralité de trous (108) perméables à l'air disposés en alignement et dans la direction de transport (R),
sachant qu'en dessous d'une partie de section supérieure de la bande transporteuse (62') ou de la bande transporteuse respective est disposé un dispositif de dépression (110) pour produire une dépression, qui coopère avec les trous (108) de telle manière que l'air est absorbé à travers les trous (108) dans le système de dépression (110) et/ou un groupe de tranches (40) est aspiré sur la bande transporteuse (62') ou les bandes transporteuses.

11. Dispositif de chargement selon la revendication 10,
**caractérisé en ce que**
le dispositif de dépression (110) comporte une buse d'aspiration de groupes de tranches (112) orientée vers le haut avec une section longitudinale pour aspirer des groupes de tranches (40), laquelle est opposée à une partie des trous (108) de telle manière qu'un groupe de tranches (40) se trouvant dans la zone de cette buse d'aspiration de groupes de tranches (112) est aspiré sur la bande transporteuse (62') ou les bandes transporteuses en raison d'une dépression dans la buse d'aspiration de groupes de tranches (112),
sachant que la section de la buse d'aspiration de groupes de tranches (112) comporte en vue de dessus une largeur transversalement à la direction de transport (R), qui est, notamment fréquemment, plus petite que la longueur de la section dans la direction de transport (R).

12. Dispositif de chargement selon la revendication 11,
**caractérisé en ce qu'**
une buse d'aspiration d'étanchéité (122, 124) vue dans la direction de transport (R) est respectivement prévue latéralement à droite et à gauche à côté de la buse d'aspiration (112) dans un but d'étanchéification, qui coopèrent avec la bande transporteuse (62') ou les bandes transporteuses de telle manière que la bande transporteuse (62') ou les bandes transporteuses est/sont aspirée(s) sur la buse d'aspiration de groupes de tranches (112).

13. Dispositif de chargement selon la revendication 12,
**caractérisé en ce que**
la buse d'aspiration de groupes de tranches (112) et les buses d'aspiration d'étanchéité (122, 124) sont reliées par un ou plusieurs conduits (118) entre elles et à un générateur de vide, notamment un générateur de vide fonctionnant avec effet Bernoulli ou avec une pompe à vide.

14. Installation de découpe et d'emballage pour découper et emballer des denrées alimentaires, comme par exemple du saucisson ou du fromage, avec une machine à découper (36) et une machine à emballer (38), sachant que la machine à découper (36) est constituée pour découper des denrées alimentaires en tranches et les tranches peuvent être transportées au moyen d'une bande transporteuse (42) de la machine à découper (36) le long d'une voie de transport en direction de la machine à emballer (38), laquelle emballe les tranches,
**caractérisée en ce que**
la machine à découper et à emballer (34) comporte un dispositif de chargement (32) selon l'une quelconque des revendications 1 à 13.

15. Installation selon la revendication 14, **caractérisée en ce que**
le dispositif de chargement (32) se trouve en direction de transport (R) vue latéralement près de la machine à découper (36) et/ou latéralement près de la machine à emballer (38).
